# EUROPEAN PATENT APPLICATION

(11) **EP 2 172 670 A1**
(43) Date of publication of application: **07.04.2010**
(21) Application number: 08791036.0
(22) Date of filing: 10.07.2008
(51) Int. Cl.: F16F 13/18

(54) **VIBRATION-PROOF DEVICE**

(30) Priority: 12.07.2007 JP 2007183405
(71) Applicant: Bridgestone Corporation, Tokyo 104-8340 (JP)
(72) Inventor: OOHASHI, Masaaki, Yokohama-shi Kanagawa 244-8510 (JP)
(74) Representative: Whalley, Kevin
(86) International application number: PCT/JP2008/062478
(87) International publication number: WO 2009/008475

(57) **Abstract**

A diaphragm 82 is attached to protrude toward an outside of a sub liquid chamber 86 in a state before an initial static load is input, and in a case where a vibration load is input in addition to an initial static load to an outer tubular metal piece 14 or an inner tubular metal piece 16, the diaphragm 82 expands and has tension applied to it. According to the present invention, it is possible to provide an anti-vibration device which is manufactured at low manufacturing costs and can suppress the generation of cavitation.

## Description

### [TECHNICAL FIELD]

The present invention relates to an anti-vibration device which is applied to a vehicle, a general industrial machine, or the like for blocking and absorbing vibration transmitted from a vibration generating unit such as an engine to a vibration receiving unit such as a vehicle body.
Priority is claimed on Japanese Patent Application No. 2007-183405, filed on July 12, 2007, the content of which is incorporated herein by reference.

### [BACKGROUND ART]

In a vehicle, a hydraulic engine mount (anti-vibration device) is disposed in order to prevent vibration transmission between an engine and a vehicle body (frame). In this kind of engine mount, an outer tubular metal piece (first member) and an inner tubular metal piece (second member) are connected by an elastic member, and one opening portion at one end of the outer tubular metal piece is blocked by a diaphragm protruding toward the inside of the outer tubular metal piece. In addition, a space formed between the diaphragm and the elastic member is partitioned into a main liquid chamber and a sub liquid chamber by a barrier member, and the main liquid chamber and the sub liquid chamber are allowed to communicate with each other through an orifice passage such as a shake orifice.

For example, in an engine mount disclosed in Patent Document 1, a pressure fluid is injected into an air chamber from an opening which is provided in a cover for communicating with external air so that a diaphragm is pressure-welded to a barrier plate. In this state, a predetermined amount of fluid is filled in a chamber surrounded by a rubber elastic member through a hole provided in a main body for communicating with external air so as to achieve a state where a load is not applied to the diaphragm under a static load.
[Patent document 1] Japanese Unexamined Patent Application, First Publication No. H04-312235

### [DISCLOSURE OF THE INVENTION]

### [PROBLEM TO BE SOLVED BY THE INVENTION]

In the engine mount described above, a large vibration load (bound load) may be input due to unevenness of a ground surface, and when a load in the opposite direction (rebound load) is input after liquid pressure in a main liquid chamber abruptly increases, there are cases where there is negative liquid pressure in the main liquid chamber.
When there is negative liquid pressure in the main liquid chamber, cavitation which is the formation of a plurality of bubbles occurs in the fluid inside the main liquid chamber. The cavitation generates abnormal noise when the bubbles disappear along with a subsequent change in the liquid pressure (increase in pressure), and the transmission of the abnormal noise to the interior of a vehicle causes degradation of quietness. In addition, since a certain period of time is required until the bubbles are completely eliminated after the starting of the increase in the liquid pressure, there is a decrease in changes in the liquid pressure of the main liquid chamber with respect to an input vibration, resulting in degradation of vibration absorption performance of the engine mount.

In the engine mount of Patent Document 1, when the large bound load which may cause the cavitation is input and the liquid pressure in the main liquid chamber abruptly increases, a large amount of the fluid inside the main liquid chamber flows into the sub liquid chamber. When the rebound load corresponding to the bound load is input, the main liquid chamber is abruptly forced to restore its original volume. However, since the engine mount of Patent Document 1 is in a state where there is hardly any load applied to the diaphragm, the liquid pressure in the sub liquid chamber is about atmospheric pressure, and it becomes difficult for the liquid flowing into the sub liquid chamber to flow back to the main liquid chamber. Consequently, there are problems in that it is easy for negative pressure to form in the main liquid chamber, and the cavitation easily occurs.

The present invention is designed to solve the above-mentioned problems. An object of the present invention is to provide an anti-vibration device which can prevent the generation of cavitation.

### [MEANS FOR SOLVING THE PROBLEM]

An anti-vibration device according to the present invention includes: a first member that is connected to one of a vibration generating unit and a vibration receiving unit and is formed in a tubular shape; a second member that is connected to the other of the vibration generating unit and the vibration receiving unit and is disposed on an inner peripheral side of the first member; an elastic member that elastically connects the first and second members to each other and blocks one opening portion of the first member; a diaphragm that blocks the other opening portion of the first member; a liquid sealed by the elastic member and the diaphragm in the first member; a barrier member that partitions an inside of the first member into a main liquid chamber on a side of the elastic member and a sub liquid chamber on a side of the diaphragm; and an orifice opening that allows the main and sub liquid chambers to communciate with each other, wherein tension is applied to the diaphragm when an additional vibration load is input in a state where an initial static load is input to the first or second member.
According to the present invention, when the vibration load is applied, tension is applied to the diaphragm, so that there is positive liquid pressure in the sub liquid chamber (equal to or greater than atmospheric pressure). Accordingly, the liquid, which flows from the main liquid chamber into the sub liquid chamber due to an input of a bound load, easily flows into the main liquid chamber again when a rebound load is input. Therefore, it is possible to moderate a rapid decrease in liquid pressure in the main liquid chamber when the rebound load is input and suppress the generation of cavitation.

The anti-vibration device may be configured so that tension is applied to the diaphragm in the case where an initial static load is input to the first or second member.
In the above described configuration, tension is applied to the diaphragm in the case where the initial static load is input, so that greater tension is applied to the diaphragm in a case where a vibration load is input in addition to the initial static load. Therefore, it is possible to more effectively moderate the rapid decrease in liquid pressure in the main liquid chamber when the rebound load is input.

The anti-vibration device may be configured so that the liquid flows from the main liquid chamber into the sub liquid chamber due to the input of the initial static load.
In this case, the diaphragm expands downward due to the input of the initial static load, and the diaphragm reliably expands due to the input of the vibration load, so that as compared with an engine mount (anti-vibration device) having a configuration in which a fluid flows from a sub liquid chamber into a main liquid chamber when an initial static load is input, it is easy to apply tension to the diaphragm.

The diaphragm may be attached to the other opening portion of the first member so as to protrude toward an outside of the sub liquid chamber in a state before the initial static load is input.
In this case, it is possible to allow the diaphragm to expand only due to the input of the initial static load, and it is easy to apply tension to the diaphragm. In addition, the diaphragm is configured by reversing an attachment direction of a diaphragm according to a related art, and can be simply assembled by using the existing diaphragm.

### [Effect of the Invention]

According to the present invention, tension is applied to the diaphragm in the case where a vibration load is input, so that it is possible to moderate an abrupt decrease in liquid pressure in the main liquid chamber when a rebound load is input and suppress the generation of cavitation.

### [BRIEF DESCRIPTION OF THE DRAWINGS]

FIG 1 is a cross-sectional view illustrating the entire configuration of an engine mount according to an embodiment of the present invention.
FIG 2 is a cross-sectional view illustrating a diaphragm of the engine mount at the time of expansion.

### [Description of Reference Numerals]

10: ENGINE MOUNT (ANTI-VIBRATION DEVICE)
14: OUTER TUBULAR METAL PIECE (FIRST MEMBER)
16: INNER TUBULAR METAL PIECE (SECOND MEMBER)
18: ELASTIC MEMBER
44: BARRIER MEMBER
84: MAIN LIQUID CHAMBER
86: SUB LIQUID CHAMBER
108: SHAKE ORIFICE (ORIFICE PASSAGE)

### [BEST MODE FOR CARRYING OUT THE INVENTION]

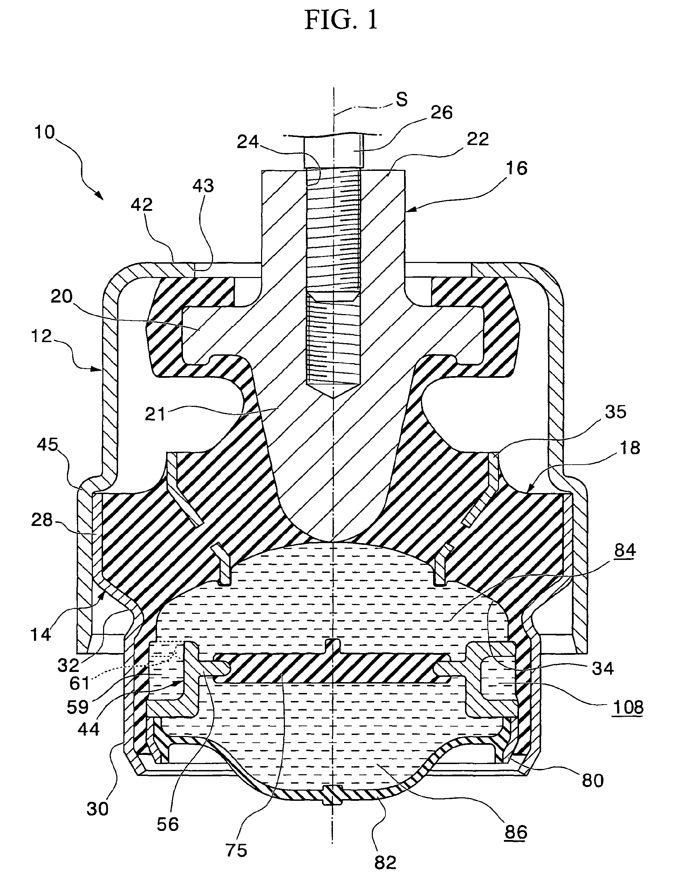

Hereinafter, an embodiment of the present invention will be described with reference to FIG 1. FIG 1 is a cross-sectional view illustrating the entire configuration of an engine mount according to the embodiment.
As illustrated in FIG 1, an engine mount (anti-vibration device) 10 supports an engine, which is a vibration generating unit in a vehicle, on a vehicle body, which is a vibration receiving unit. In addition, in the following description, reference numeral S in the figure denotes an axis of the engine mount 10, and a direction along the axis S is referred to as an axial direction of the engine mount 10.

The engine mount 10 includes: a tubular shaped bracket metal piece 12; a cylindrical outer tubular metal piece (first member) 14 internally fitted and fixed to the bracket metal piece 12; an inner tubular metal piece (second member) 16 disposed upper side in an inner periphery of the outer tubular metal piece 14 in substantially the same axial direction; and an elastic member 18 which is made of a rubber material or the like and is disposed between the outer tubular metal piece 14 and inner tubular metal pieces 16.

The bracket metal piece 12 is a tubular member and has a top plate portion 42 disposed to block one opening portion. An insertion hole 43 of the inner tubular metal piece 16 is provided at the center portion of the top plate portion 42. In addition, the bracket metal piece 12 has an enlarged diameter portion 45 which is enlarged outwardly in a radial direction on the side of the other opening portion. A leg member (not shown) is fixed to an outer peripheral surface of the bracket metal piece 12 so as to be fastened and fixed to the side of the vehicle body by a bolt.

An upper end portion of the outer tubular metal piece 14 is provided with a cylindrical large diameter portion 28, and a lower end side thereof is provided with a cylindrical small diameter portion 30 having a smaller diameter than that of the large diameter portion 28. The outer tubular metal piece 14 is provided with a throttle portion 32 of which a diameter is reduced inwardly between the large and small diameter portions 28 and 30 along the entire periphery.

The inner tubular metal piece 16 is a shell-shaped member, and an upper portion thereof is provided with a connection portion 22 extending along the axis S. The connection portion 22 is inserted into the insertion hole 43 of the bracket metal piece 12, and a threaded hole 24 is perforated into the center portion of the connection portion 22. A bolt 26 is screwed to the threaded hole 24 to fix an engine bracket (not shown), so that the inner tubular metal piece 16 is fastened and fixed to the side of the engine via the engine bracket. A lower side of the inner tubular metal piece 16 is provided with a tapered portion 21 which is tapered to a lower portion. In addition, an anchor portion 20 which protrudes outwardly in a radial direction of the inner tubular metal piece 16 is provided between the connection portion 22 and the taper portion 21.

An outer peripheral surface of the elastic member 18 is vulcanized and adhered to inner peripheries of the large diameter portion 28 and the throttle portion 32 of the outer tubular metal piece 14, and an inner peripheral surface thereof is vulcanized and adhered to an outer periphery of the tapered portion 21 of the inner tubular metal piece 16. Accordingly, the outer tubular metal piece 14 and the inner tubular metal piece 16 are elastically connected to each other. An inner ring 35 which penetrates the elastic member 18 to surround the tapered portion 21 of the inner tubular metal piece 16 is provided between the outer tubular metal piece 14 and the inner tubular metal piece 16. In addition, an upper end portion of the inner peripheral surface of the elastic member 18 is provided to surround an outer periphery of the anchor portion 20 so as to form a rebound stopper mechanism together with the bracket metal piece 12. A lower side of the elastic member 18 is formed in a concave shape to serve as a liquid chamber formation region 34 including main and sub liquid chambers 84 and 86 described later.

A cylindrical diaphragm supporting member 80 is insert-fitted into an inner peripheral side of the small diameter portion 30 of the outer tubular metal piece 14.
A diaphragm 82 made of an elastic material such as rubber is vulcanized and adhered to an inner periphery of the diaphragm supporting member 80. The diaphragm 82 is formed in a convex bowl shape and is attached to protrude downward along the axis S (outward from the liquid chamber formation region 34). The diaphragm supporting member 80 is fixed by swaging the small diameter portion 30 of the outer tubular metal piece 14 in the inner side of the radial direction. Accordingly, the liquid chamber formation region 34 is sealed to contain a liquid therein. Here, ethylene glycol, water, or the like is used as a fluid filling the liquid chamber formation region 34.

A barrier member 44 held between the diaphragm supporting member 80 and the throttle portion 32 of the outer tubular metal piece 14 is provided in the liquid chamber formation region 34.
A lower side of the liquid chamber formation region 34 is sealed by the diaphragm 82 with the barrier member 44, and the sub liquid chamber 86 is formed between the barrier member 44 and the diaphragm 82. An upper side of the liquid chamber formation region 34 is sealed by the elastic member 18 with the barrier member 44, and the main liquid chamber 84 is formed between the elastic member 18 and the barrier member 44.

The barrier member 44 includes an annular base portion 56 at the center. A membrane 75 for blocking an opening portion of the base portion 56 is provided so as to extend across the opening portion. The membrane 75 is made of an elastic material such as rubber so as to be flexible.

An orifice groove 59 having a U-shaped cross-section that is open to the outside in the radial direction is provided on an outer peripheral side of the base portion 56 to surround the base portion 56. The orifice groove 59 is provided with an upper communication hole 61 by cutting a portion of an upper side of the orifice groove 59 along a circumferential direction, and is provided with a lower communication hole (not shown) by cutting a portion of a lower side of the orifice groove 59 along the circumferential direction. In addition, a barrier wall (not shown) for blocking the inside of the orifice groove 59 in the circumferential direction is provided in the orifice groove 59 between the upper communication hole 61 and the lower communication hole.

The orifice groove 59 of the aforementioned barrier member 44 communicates with the main liquid chamber 84 through the upper communication hole 61, and also communicates with the sub liquid chamber 86 through the lower communication hole. Accordingly, an orifice passage is formed which is an elongated passage for allowing the main and sub liquid chamber 84 and 86 to communicate with each other. In the engine mount 10 according to the embodiment, a shake orifice 108 is formed by the orifice passage including the orifice groove 59, the upper communication hole 61, and the lower communication hole.

In addition, a passage length and a cross-sectional area of the shake orifice 108, that is, a passage resistance, are set (tuned) to correspond to a frequency (for example, 8 to 12 Hz) of shake vibration which is a resonant vibration in a low frequency range in a vehicle.

Here, the diaphragm 82 formed in a convex bowl shape is attached to protrude toward the outside of the sub liquid chamber 86 in a state before an initial static load is input due to engine weight, that is, before the diaphragm 82 is mounted to the vehicle body. Accordingly, the fluid flows from the main liquid chamber 84 into the sub liquid chamber 86 due to the input of the initial static load, and the diaphragm 82 expands downward to generate tension. In addition, as the diaphragm 82 further expands due to an input of vibration load, tension increases.

Specifically, a downward force is applied to the inner tubular metal piece 16 of the engine mount 10 by the input of the initial static load from the engine, the elastic member 18 which is a main vibration absorbing member elastically deforms to contract the main liquid chamber 84, and the fluid inside the main liquid chamber 84 flows into the sub liquid chamber 86 through the shake orifice 108. Accordingly, the flexible diaphragm 82 which forms the sub liquid chamber 86 expands downward, so that tension is always applied to the diaphragm 82 in such a direction that an inner volume of the sub liquid chamber 86 is restored.

In addition, since the engine mount 10 according to the embodiment is configured so that the fluid flows from the main liquid chamber 84 into the sub liquid chamber 86 due to the input of the initial static load, the diaphragm 82 reliably expands when the vibration load is input. Accordingly, as compared with an engine mount having a configuration (a so-called suspension type) in which a fluid flows from a sub liquid chamber to a main liquid chamber when an initial static load is input, tension is easily applied to the diaphragm 82 in the configuration of this embodiment.

### Operation

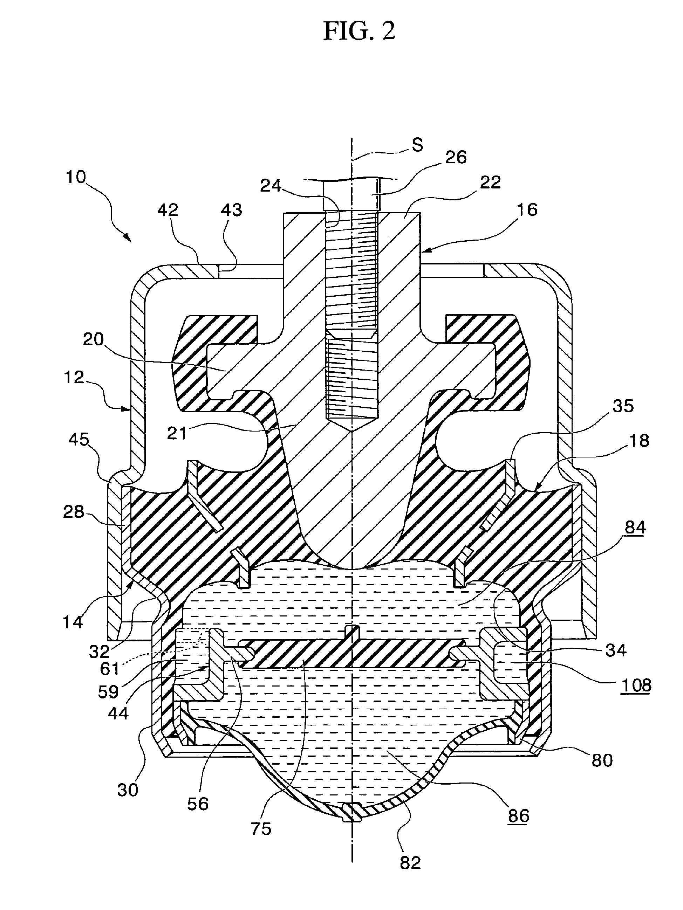

Now, operations of the engine mount 10 according to this embodiment will be described with reference to FIGS. 1 and 2. FIG 2 is a cross-sectional view illustrating the engine mount during expansion of the diaphragm, and more specifically, a case where an initial static load is applied to the engine mount.
In the engine mount 10, when the vibration load is input from the engine or the vehicle body, the input vibration is blocked and absorbed by the elastic member 18 as the elastic member 18 elastically deforms.

First, when the input vibration has a frequency equal to or lower than a frequency (for example, 8 to 12 Hz) of the shake vibration and has a relatively large amplitude, the fluid passes between the main and sub liquid chambers 84 and 86 through the shake orifice 108.

Since the path length and the cross-sectional area of the shake orifice 108 are tuned to be suitable for the frequency and the amplitude of the shake vibration, in a case where the input vibration is particularly the shake vibration, a resonance phenomenon (liquid column resonance) occurs in the fluid passing through the shake orifice 108, so that the shake vibration can be effectively absorbed by an operation of the liquid column resonance.
In addition, in the case where the input vibration has a larger frequency and thus has a smaller amplitude than those of the shake vibration (for example, in a case where the input vibration is idle vibration (for example, 20 to 40 Hz)), the shake orifice 108 tuned to be suitable for the shake vibration becomes clogged, and the fluid cannot easily flow through the shake orifice 108. Here, the membrane 75 vibrates in synchronization with the input vibration, so that it is possible to moderate an increase in liquid pressure in the main liquid chamber 84. Accordingly, an increase in dynamic spring constant according to the increase in liquid pressure in the main liquid chamber 84 is moderated, and a low dynamic-to-static modulus ratio is achieved, so that intermediate and high frequency vibrations such as the idle vibration can be effectively absorbed.

In addition, according to the embodiment, when the same vibration load as that of the shake vibration or the idle vibration load is input, as described above, the diaphragm 82 already expands downward and the tension is applied in the restoration direction. However, since the tension of the diaphragm 82 at this time is small, degradation in the anti-vibration effect due to the tension is small. Therefore, even in the case where the shake vibration or the idle vibration described above is input, vibrations can be effectively absorbed.

However, after the liquid pressure in the main liquid chamber 84 increases abruptly due to a large bound load caused by unevenness of a ground surface, when a rebound load corresponding to the bound load is input, there may be a case where there is negative liquid pressure in the main liquid chamber 84. When there is negative liquid pressure in the main liquid chamber 84, cavitation which is the formation of a plurality of bubbles in the fluid inside the main liquid chamber 84 occurs.

Specifically, when the large bound load which may cause the cavitation described above is applied, the main liquid chamber 84 is contracted along with the elastic member 18 by the inner tubular metal piece 16, and thus the inner volume of the main liquid chamber 84 is reduced. Accordingly, the liquid pressure in the main liquid chamber 84 increases abruptly, and a large amount of the fluid inside the main liquid chamber 84 flows into the sub liquid chamber 86 through the shake orifice 108.
When the fluid flows into the sub liquid chamber 86, the inner volume of the sub liquid chamber 86 increases. Accordingly, as illustrated in FIG. 2, the diaphragm 82 expands downward significantly.

After the bound load is applied, the rebound load corresponding to the bound load is applied to the engine mount 10.
Here, the diaphragm 82 expands due to the initial static load and is given tension in advance, and further expands due to the bound load, so that the tension increases. Accordingly, there is positive liquid pressure in the sub liquid chamber 86 (equal to or greater than atmospheric pressure).
Consequently, the fluid flowing into the sub liquid chamber 86 from the main liquid chamber 84 easily flows again into the main liquid chamber 84 through the shake orifice 108. Therefore, the abrupt change in the liquid pressure in the main liquid chamber 84 which occurs when the rebound load is input after the bound load is input can be moderated, thereby preventing the generation of the negative pressure in the main liquid chamber 84.

According to the embodiment, the configuration in which when the vibration load is input to the outer tubular metal piece 14 or the inner tubular metal piece 16 in addition to the initial static load, tension is applied to the diaphragm 82.
In this configuration, when the vibration load is input, the tension is applied to the diaphragm 82, and there is positive liquid pressure in the sub liquid chamber 86 (equal to or more than atmospheric pressure). Therefore, the fluid flowing from the main liquid chamber 84 into the sub liquid chamber 86 due to the input bound load easily flows into the main liquid chamber 84 again when the rebound load is input. Accordingly, it is possible to moderate an abrupt decrease in the liquid pressure in the main liquid chamber 84 at the time when the rebound load corresponding to the large bound load that may cause cavitation is input, and it is possible to suppress the generation of cavitation.

In addition, the diaphragm 82 is mounted to protrude outward, though a typical diaphragm is mounted to protrude inward with respect to a sub liquid chamber. Therefore, it is possible to allow the diaphragm 82 to expand due to only the input of the initial static load, so that it is easy to apply tension to the diaphragm 82. In addition, comparing to the related art, a diaphragm is configured by reversing the attachment direction of the diaphragm 82. Therefore, the diaphragm 82 can be simply assembled by using existing diaphragms.

In addition, there is a hydraulic engine mount including a cover member covering a diaphragm, and an air chamber sealed between the diaphragm and the cover member.
In this engine mount, when a fluid flows from a main liquid chamber to a sub liquid chamber due to a bound load input, the air inside the air chamber is compressed, and the air pressure is increased. With the increase in the air pressure, liquid pressure in the sub liquid chamber increases which is the same as in the present invention. Accordingly, it is confirmed by an experiment that it is possible to suppress cavitation as according to the present invention.
Unlike the existing engine mount, there is no need to provide a cover member on an outside of the diaphragm 82 in the present invention. Therefore, the number of components or processes for the assembling operation can be reduced, thereby reducing manufacturing costs. In addition, a space for mounting the cover member can be reduced, thereby achieving a decrease in size and weight of the engine mount 10.

The present invention is not limited to the embodiments described above, and modifications of the embodiments can be made without departing from the spirit and scope of the present invention.
For example, the shape of the diaphragm is not limited to the downwardly convex shape, and may employ any shape that causes tension to be applied to the diaphragm when a vibration load is input.

In addition, the diaphragm may be configured to have tension applied to it when at least a vibration load that causes caviation is input, and the tension may not be applied in a case where only the static load is exerted by the weight of the engine or the like.
In addition, according to this embodiment, the inner tubular metal piece is connected to the side of the engine and the outer tubular metal piece is connected to the side of the vehicle body. However, on the contrary, the inner tubular metal piece may be connected to the side of the vehicle body, and the outer tubular metal piece may be connected to the side of the engine.

### [INDUSTRIAL APPLICABILITY]

It is possible to reduce manufacturing costs and suppress the generation of cavitation.

## Claims

1. An anti-vibration device comprising:
a first member that is connected to one of a vibration generating unit and a vibration receiving unit and is formed in a tubular shape;
a second member that is connected to the other of the vibration generating unit and the vibration receiving unit and is disposed on an inner peripheral side of the first member;
an elastic member that elastically connects the first and second members to each other and blocks one opening portion of the first member;
a diaphragm that blocks the other opening portion of the first member;
a liquid sealed by the elastic member and the diaphragm in the first member;
a barrier member that partitions an inside of the first member into a main liquid chamber on a side of the elastic member and a sub liquid chamber on a side of the diaphragm; and
an orifice opening that allows the main and sub liquid chambers to communicate with each other,
wherein tension is applied to the diaphragm when an additional vibration load is input in a state where an initial static load is input to the first or second member.

2. The anti-vibration device according to claim 1, wherein tension is applied to the diaphragm in a state where the initial static load is input to the first or second member.

3. The anti-vibration device according to claim 1 or 2, wherein the liquid flows from the main liquid chamber into the sub liquid chamber due to the input of the initial static load.

4. The anti-vibration device according to claim 2, wherein the diaphragm is attached to the other opening portion of the first member so as to protrude toward an outside of the sub liquid chamber in a state before the initial static load is input.
